# EUROPÄISCHE PATENTANMELDUNG

(11) **EP 1 091 213 A1**
(43) Veröffentlichungstag der Anmeldung: **11.04.2001**
(21) Anmeldenummer: 00111142.6
(22) Anmeldetag: 24.05.2000
(51) Int. Cl.: G01R 15/12, G01R 15/09

(54) **Signal-identifizierende Schaltungsanordnung**

(30) Priorität: 04.10.1999 DE 19948430
(71) Anmelder: Endress + Hauser Wetzer GmbH + Co. KG, D-87484 Nesselwang (DE)
(72) Erfinder: Schmidt, Dieter, 87484 Nesselwang (DE)
(74) Vertreter: Morstadt, Volker Dipl.-Ing.

(57) **Zusammenfassung**

Die Schaltungsanordnung dient dazu, einer vorbestimmten Signalklasse zugeordnetes Eingangs-Signal (s1) zu identifizieren. Hierzu umfaßt die Schaltungsanordnung eine Signalanpassungs-Elektronik (1), die einen Stromanteil und/oder einen Spannungsanteil des Eingangs-Signals (s1) erfaßt und ein entsprechendes Ausgangs-Signal (s2) liefert. Mittels einer Signalerkennungs-Elektronik (2) der Schaltungsanordnung wird das Ausgangs-Signal (s2) in ein die Signalklasse repräsentierendes Erkennungs-Signal (c1) überführt.

## Beschreibung

Die Erfindung betrifft eine Schaltungsanordnung zum Identifizieren von klassierten Signalen.

Mittels industrieller Meßgeräte werden Prozeßmeßgrößen, wie z.B. pH-Wert, Druck, Temperatur, Füllstand in Meßwert tragende elektrische Meßsignale umgewandelt. Dazu wird mittels entsprechender Sensorelemente, z.B. mittels pH-Elektroden, Druckzellen, temperaturabhängigen oder dehnungsabhängigen Widerständen, die Prozeßmeßgröße erfaßt und mittels einer entsprechenden Meß-Elektronik, z.B. einer Widerstandsmeßbrücke, auf einen Stromanteil oder einen Spannungsanteil des Meßsignals aufmoduliert. Da Sensoren stets nur über jeweils begrenzte Meßbereiche der Prozeßmeßgröße einsetzbar sind, werden die Meßwerte ebenfalls nur in einem begrenzten Strom- bzw. Spannungsbereich dargestellt.

Üblicherweise ist sind diese Strom- und Spannungsbereiche standardisiert. So werden strom-modulierte Meßsignale z.B. bevorzugt mit einem Strombereich von 4 mA...20 mA verwendet. Andere dem Fachmann geläufige Arten von Meßsignalen sind z.B. spannungs-modulierte Signale in einem Spannungsbereich 0 bis 10 V.

Zur Anzeige, Registrierung oder Weiterverarbeitung der Meßwerte aus dem Meßsignal sowie zur Ermittlung von entsprechenden Meßergebnissen sind den Meßgeräten ausgangsseitig analoge und/oder digitale Signalverarbeitungs-Einheiten nachgeschaltet, denen das Meßsignal über entsprechende signalanpassende Eingangsschaltungen zugeführt ist.

Bei auf den Strom des Meßsignals moduliertem Meßwert, wird zum Anpassen des Signals die Eingangsschaltung entsprechend stromerfassend und bei auf die Spannung des Meßsignals moduliertem Meßwert, wird die Eingangsschaltung entsprechend spannungserfassend eingestellt. Ferner ist es üblich, mittels derartiger Eingangsschaltungen eine von der Art des Meßsignals abhängige Signal-Vorverarbeitung zu realisieren, z.B. das Meßsignal zu verstärken und/oder zu filtern. Dazu ist das jeweilige Eingangssignal während der Inbetriebnahme an den jeweils darstellenden Strom- bzw. Spannungsbereich anzupassen.

Das Einstellen und Anpassen der Signalverarbeitungs-Einheit kann einerseits sehr zeitaufwendig sein, insb. bei einer Signalverarbeitungs-Einheit, die gleichzeitig Ausgangs-Signale von mehreren Meßgeräten empfängt, wodurch die Ausfall- und die Inbetriebnahmekosten sehr hoch ausfallen können. Andererseits ist für das Einstellen der Signalverarbeitungs-Einheit eine genau Kenntnis über die Art der Meßsignale an den anzuschließenden Meßstellen unbedingte Voraussetzung.

Dementsprechend sind für hinreichend schnelle Inbetriebnahmen aufwendige Voreinstellungen, insb. der Eingangsschaltung, vorzunehmen, d.h. kurzfristige Inbetriebnahmen derartiger Signalverarbeitungs-Einheiten sind praktisch nicht durchführbar. Bei mobil einsetzbaren Signalverarbeitungs-Einheiten erfolgt die Inbetriebnahme in entsprechender Weise mehrfach mit einem dementsprechend höheren Zeit- und Kostenaufwand.

Eine Aufgabe der Erfindung besteht daher darin, eine signal-identifizierende Schaltungsanordnung für eine Signalverarbeitungs-Einheit anzugeben, die den Aufwand zu deren Inbetriebnahme verringert.

Zur Lösung der Aufgabe besteht die Erfindung in einer Schaltungsanordnung zum Identifizieren eines zu einer vorbestimmten Signalklasse gehörenden Eingangs-Signal, welche Schaltungsanordnung umfaßt:
- eine Signalanpassungs-Elektronik für das Eingangs-Signal, die ein Ausgangs-Signal erzeugt,
   -- das einen Stromanteil des Eingangs-Signals und/oder
   -- das einen Spannungsanteil des Eingangs-Signals repräsentiert sowie
- eine Signalerkennungs-Elektronik, die mittels des Ausgangs-Signals ein die Signalklasse repräsentierendes Erkennungs-Signal liefert.

Nach einer ersten Ausgestaltung der Erfindung umfaßt die Schaltungsanordnung eine Einstellungs-Elektronik, die mittels des Erkennungs-Signals ein dem Einstellen und/oder dem Parametrieren der Signalanpassungs-Elektronik dienendes Stell-Signal erzeugt.

Nach einer zweiten Ausgestaltung der Erfindung umfaßt die Schaltungsanordnung eine den Stromanteil des Eingangs-Signals liefernde Stromquelle.

Nach einer dritten Ausgestaltung der Erfindung ist das Eingangs-Signal ein Ausgangs-Signals eines Meßgerätes.

Nach einer vierten Ausgestaltung der Erfindung dient die Schaltungsanordnung als eine Komponente einer Meßdaten erfassenden Signalverarbeitungs-Einheit.

Ein Grundgedanke der Erfindung besteht darin, die Signalverarbeitungs-Einheit in einer Signal-Umgebung von vorbestimmten Signalklassen einzusetzen und eingangsseits, insb. während der Inbetriebnahme der Schaltungsanordnung, mit einem zu einer dieser Signalklassen gehörenden Eingangs-Signal zu beaufschlagen und mittels der Signalerkennungs-Elektronik die tatsächlich vorliegende Signalklasse festzustellen und somit das Eingangs-Signal zu identifizieren.

Weiterführend werden aus der jeweils detektierten Signalklasse Vorgaben für die Einstellung der Signalanpassungs-Elektronik als im Betrieb strom-oder spannungserfassend und ggf. für eine entsprechende Parametrierung derselben Schaltungsanordnung abgeleitet und automatisch oder in Kommunikation mit dem Anwender halbautomatisch umgesetzt.

Ein Vorteil der Erfindung ist, daß die Schaltungsanordnung während der Inbetriebnahme, basierend auf einer Identifizierung des Eingangs-Signals, automatisch und damit in sehr kurzer Zeit an dieses angepaßt und dementsprechend schnell in den Meßbetrieb überführt werden kann.

Ein weiterer Vorteil der Erfindung besteht darin, daß während der Inbetriebnahme der Signalverarbeitungs-Einheit nichtbenutzte, also nicht mit einem Eingangs-Signal beaufschlagte Schaltungsanordnungen erkannt und dementsprechend deaktiviert werden können. Umgekehrt können solche Schaltungsanordnungen auch im Betrieb der Signalverarbeitungs-Einheit nachträglich aktiviert und in entsprechender Weise eingestellt werden können.

Die Erfindung und weitere Vorteile werden nun anhand von Ausführungsbeispielen näher erläutert, die in den Figuren der Zeichnung dargestellt sind. Gleiche Teile sind in allen Zeichnungen mit den gleichen Bezugszeichen versehen; wenn es die Übersichtlichkeit erfordert, wird auf bereits erwähnte Bezugszeichen in nachfolgenden Figuren verzichtet.
- Fig. 1: zeigt nach der Art eines Blockschaltbildes eine Schaltungsanordnung mit einer Signalanpassungs-Elektronik und mit einer Signalerkennungs-Elektronik zum Identifizieren eines Eingangs-Signals,
- Fig. 2: zeigt eine Weiterbildung der Signalanpassungs-Elektronik,
- Fig. 3: zeigt eine Teilschaltung der Signalanpassungs-Elektronik,
- Fig. 4: zeigt ein bevorzugtes Ausführungsbeispiel der Signalerkennungs-Elektronik und
- Fig. 5: zeigt eine Weiterbildung der Signalanpassungs-Elektronik.

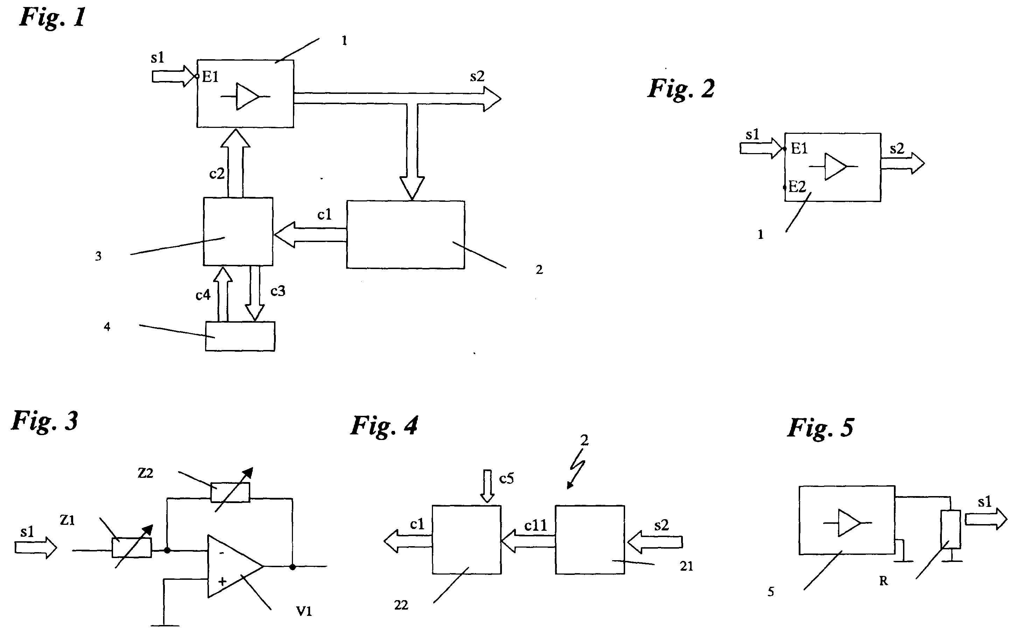

In der Fig. 1 ist nach der Art eines Blockschaltbildes eine Schaltungsanordnung gezeigt, die als eine Komponente einer teilweise dargestellten, insb. Meßdaten erfassende, Signalverarbeitungs-Einheit, z.B. eines Datenspeicher-Gerätes und/oder eines Datenanzeige-Gerätes, dazu dient, ein eingangsseits zugeführtes, eine Information übertragendes Eingangs-Signal s1 zu erfassen und ausgangsseits in ein die Information weitertragendes, insb. digitales, erstes Ausgangs-Signal s2 so umzuwandeln, daß es von nachgeschalteten Komponenten der Signalverarbeitungs-Einheit, insb. einer nichtdargestellten Auswerte-Elektronik, weiterverarbeitet werden kann.

Als Eingangs-Signal s1 kann z.B. ein elektrisches, insb. analoges, Ausgangs-Signal eines nichtdargestellten Meßgerätes, z.B. eines Temperatur-Meßgerätes, eines Druck-Meßgerätes, eines Durchfluß-Meßgerätes, eines pH-Wert-Meßgerätes oder eines Füllstand-Meßgerätes, dienen, das als Information einen vom Meßgerät erzeugten Meßwert oder einen einen momentanen Betriebszustand dieses Meßgerätes repräsentierenden Parameterwert überträgt. Das Eingangs-Signal s1 kann des weiteren auch ein Ausgangs-Signal einer anderen, ebenfalls nichtdargestellten, Signalverarbeitungs-Einheit sein.

Die Schaltungsanordnung ist erfindungsgemäß für den Einsatz innerhalb einer Signal-Umgebung vorgesehen, die als Eingangs-Signal s1 dienende verschiedenartige Signale liefert, wobei letztere mindestens einer ersten vorbestimmten Signalklasse, z.B. für Stromsignale, und/oder einer zweiten vorbestimmten Signalklasse, z.B. für Spannungssignale, zuordenbar sind. Unter Signal-Umgebung wird im Zusammenhang mit der Erfindung ein, insb. durch die verwendeten Meßgeräte, vordefiniertes, nach einzelnen Signalklassen geordnetes Ensemble von für den jeweils konkreten Einsatz der Schaltungsanordnung möglichen verschiedenartigen, klassierbaren Signalen verstanden, die mittels entsprechender Signalquellen erzeugt und der Schaltungsanordnung zugeführt sind.

Stromsignale werden üblicherweise als ein Ausgangs-Signal einer Signalquelle, z.B. einer als spannungsgesteuerte Stromquelle konfigurierten Verstärkerschaltung, erzeugt, die ausgangsseits eine, zumindest in einem vorgebbaren Strombereich, von der Höhe eines als Informationsträger dienenden Stromanteils im wesentlichen unabhängige, praktisch konstante Spannung aufweist. Demgegenüber werden Spannungssignale üblicherweise mittels einer Signalquelle, z.B. einer als spannungsgesteuerte Spannungsquelle konfigurierten Verstärkerschaltung erzeugt, die ausgangseits eine, zumindest in einem vorgebbaren Spannungsbereich, von der Höhe eines als Informationsträger dienenden Spannungsanteils im wesentlichen unabhängigen, praktisch konstanten Strom liefert. Ferner kann als Signalquelle für Spannungssignale auch ein von einer zu messenden Prozeßgröße abhängiger und von einem vorgegebenen Strom durchflossener Widerstand dienen.

In Signal-Umgebungen der industriellen Meß- und Kommunikationstechnik werden als Informationsträger üblicherweise Stromsignale in einem Strombereich von z.B. 0 bis 20 mA oder 4 mA bis 20 mA bzw. Spannungssignale in einem Spannungsbereich von z.B. 0 bis 1 V, 0 bis 10 V, 19 mV bis 390 mV oder -10 mV bis 80 mV genutzt. Jeder dieser Bereiche ist wiederum als jeweils eine vorbestimmte Signalklasse dieser Signal-Umgebung definierbar.

Dementsprechend ist die Schaltungsanordnung vor dem Betrieb der Signalverarbeitungs-Einheit in Abhängigkeit von der Signalklasse des jeweils zu übertragenden Eingangs-Signals s1 so einzustellen, daß die Information ausgangsseits unabhängig vom Informationsträger, also auch unabhängig vom Informations tragenden Strom- oder Spannungsbereich, einheitlich auf das Ausgangs-Signal s2 abgebildet wird. Als Ausgangs-Signal s2 kann z.B. ein Spannungssignal dienen, das die Information in einem vorgegebenen Spannungsbereich von 0 bis 1 V darstellt.

Gemäß Fig. 1 umfaßt die Schaltungsanordnung dazu eine, insb. im Betrieb parametrierbare, Signalanpassungs-Elektronik 1 mit einem, insb. abschaltbaren, ersten Signal-Anschluß E1 für das Eingangs-Signal s1, die als im Betrieb einen Stromanteil und/oder einen Spannungsanteil des Eingangs-Signals s1 erfassend einstellbar ist. Als Signalanpassungs-Elektronik 1 können z.B. als stromgesteuerte oder als spannungsgesteuerte Spannungsquellen konfigurierte Verstärkerschaltungen von vorgebbarer, insb. im Betrieb einstellbarer, Verstärkung und Eingangsimpedanz dienen. Derartig einstellbare Eingangsimpedanzen und Verstärkungen werden üblicherweise z.B. mittels diskret veränderlicher, durchschaltbarer Impedanznetze und/oder mittels Feldeffekt-Transistoren realisiert.

Die Schaltungsanordnung umfaßt ferner eine Signalerkennungs-Elektronik 2 die ausgangseits ein die Signalklasse des Eingangs-Signals s1 repräsentierendes und somit dieses identifizierendes, quantisiertes Erkennungs-Signal c1 liefert. Die Signalerkennungs-Elektronik 2 dient, insb. während der Inbetriebnahme der Signalverarbeitungs-Einheit, dazu, das in das Ausgangs-Signal s2 überführte Eingangs-Signal s1 zu klassieren, d.h. einer vorbestimmten Signalklasse, insb. der ersten und/oder der zweiten Signalklasse, zuzuordnen und somit das Eingangs-Signal s1, insb. dessen Informationsträger, zu identifizieren.

Als Erkennungs-Signal c1 können sowohl sequentielle Signalpegelfolgen eines einzigen Signal-Ausganges der Signalerkennungs-Elektronik 2 als auch eine geordnete Folge momentaner Signalpegel mehrerer Signal-Ausgänge der Signalerkennungs-Elektronik 2 dienen. Insbesondere für den letzteren Fall kann in vorteilhafter Weise jeder Signalklasse ein entsprechender Signalausgang zugeordnet und für eine direkte Anzeige verwendet werden. Insgesamt kann bei Verwendung einer Anzahl *n* von Signal-Ausgängen mit binären Signalpegelzustände das Erkennungs-Signal c1 *2*^{*n*}*-1* voneinander verschiedene dualwertige Signalpegelzustände annehmen, d.h. mittels der Signalerkennungs-Elektronik 2 können z.B. bis zu *2*^{*n*}*-1* Signalklassen codiert werden.

Bei der Verwendung von mehrwertigen Signalpegeln, insb. in einem normierten Wertebereich von größer gleich logisch null und kleiner gleich logisch eins, kann das Erkennungs-Signal c1 auch einer unscharfen, z.B. fuzzy-logischen und/oder wahrscheinlichkeits-bedingten, Zuordnung des Eingangs-Signals s1 auf die Signalklassen dienen. Für diesen Fall ist das Eingangs-Signal s1 z.B. mit einem Zugehörigkeits-Anteil von 0 bis 100% je Signalklasse gleichzeitig mehreren Signalklassen zuordenbar, insb. in Abhängigkeit von für die Signalklassen der jeweiligen Signal-Umgebung a priori festgelegten Auftretens-Wahrscheinlichkeiten.

Das Einstellen der Signalanpassungs-Elektronik 1, z.B. als Stromanteil erfassend und/oder Spannungsanteil erfassend, erfolgt während der bereits erwähnten, dem eigentlichen Betrieb der Signalverarbeitungs-Einheit vorausgehenden Inbetriebnahmephase, und zwar zeitgesteuert und/oder, insb. im Dialog mit einem interagierenden Anwender, ereignisgesteuert.

Dazu umfaßt die Schaltungsanordnung eine Einstellungs-Elektronik 3, die ausgangsseits ein ebenfalls quantisiertes Stell-Signal c2 liefert. Als Stell-Signal dient hierbei ein Ensemble binärer und/oder analoger Signalpegel, die an mit entsprechenden Stell-Eingängen oder mit Parameter-Eingängen der Signalanpassungs-Elektronik 1 verbundenen Signal-Ausgängen der Einstellungs-Elektronik 3 erzeugt werden.

Das Stell-Signal c2 dient einerseits dazu, die Signalanpassungs-Elektronik 1, insb. während der Inbetriebnahmephase der Signalverarbeitungs-Einheit in der oben beschriebenen Weise temporär und für den Meßbetrieb fest als den Stromanteil und/oder als den Spannungsanteil erfassend einzustellen und entsprechend zu parametrieren. Andererseits kann das Stell-Signal c2 auch einer Deaktivierung der Signalanpassungs-Elektronik 1 bei nicht angelegten oder bei nicht identifizierten Eingangs-Signal s1 dienen. Des weiteren kann das Stell-Signal c2 auch zur Parametrierung von Signal-Filtern der Signalanpassungs-Elektronik, insb. von deren Filterordnung sowie von deren obere und/oder untere Grenzfrequenz, verwendet werden.

Derartige Signal-Filter, insb. Tiefpaß-Filter 1. Ordnung mit einer oberen Grenzfrequenz von höchstens gleich 5 Hz, werden z.B. bei direkt angeschlossenen Thermoelemente- oder Widerstands-Thermometern verwendet.

Zur Realisierung des Dialoges mit dem Anwender erzeugt die Einstellungs-Elektronik 3 mittels des eingangsseitig zugeführten Erkennungs-Signals c1 ein die Signalklasse des Eingangs-Signals s1 repräsentierendes Anzeige-Signal c3, das dem Ansteuern einer Ein-Ausgabe-Einheit 4 der Schaltungsanordnung dient. Ferner empfängt die Einstellungs-Elektronik 3 ein die Eingaben des Anwenders repräsentierendes Steuer-Signal c4 der Ein-Ausgabe-Einheit 4. Als Ein-Ausgabe-Einheit 4 kann z.B. ein Monitor mit einem Behrührungs-Bildschirm und/oder mit einer Tastatur dienen. In vorteilhafter Weise kann das Erkennungs-Signal c1 auch zur Generierung des Stell-Signals c2 dienen.

Nach einer bevorzugten Weiterbildung der Erfindung umfaßt die Signalanpassungs-Elektronik 1 gemäß Fig. 2 einen, insb. abschaltbaren, zweiten Signal-Anschluß E2 für das Eingangs-Signal s1. Als Eingangs-Signal s1 dient hierbei ein Ausgangs-Signal eines mit der Signalanpassungs-Elektronik 1 wenigstens zeitweise verbundenen Signalverteiler-Moduls, z.B. einer dem oben erwähnten Meßgerät nachgeschalteten Klemm- und/oder Steckerleiste. Das Signalverteiler-Modul ist so konfiguriert, daß es das Eingangs-Signal s1 an den Signal-Anschluß E1 nur für den Fall legt, daß dieses von erster Signalklasse, z.B. ein Stromsignal, ist. Ferner ist das Signalverteiler-Modul so konfiguriert, daß es das Eingangs-Signal s1 an den Signal-Anschluß E2 nur für den Fall legt, daß dieses von zweiter Signalklasse, z.B. ein Spannungssignal, ist.

Nach einer bevorzugten Ausgestaltung der Erfindung umfaßt die Signalanpassungs-Elektronik 1 gemäß Fig. 3 eine erste Verstärkerschaltung V1, der das Eingangs-Signal s1 über eine einstellbare, insb. einen kleinsten Widerstandswert von praktisch 0 Ω aufweisende, erste Impedanz Z1, z.B. einen ohmschen Widerstand, an einen invertierenden Verstärker-Eingang zugeführt ist. Ferner weist die Verstärkerschaltung V1 eine einen Verstärker-Ausgang mit dem Verstärker-Eingang verbindende einstellbare zweite Impedanz Z2 auf. Die Eingangsimpedanz der Verstärkerschaltung V1 ist dabei mittels der Impedanz Z1 und die Verstärkung ist mittels beider Impedanzen Z1, Z2 einstellbar.

Nach einer weiteren bevorzugten Ausgestaltung der Erfindung ist die Impedanz Z1 niederohmig so eingestellt, daß das Eingangs-Signal s1 praktisch widerstandslos, an den Verstärker-Eingang geführt und somit die Signalanpassungs-Elektronik 1 als einen, insb. die Information tragenden, Stromanteil vom Eingangs-Signal s1 erfassend und auf das Ausgangs-Signal s2 abbildend, konfiguriert ist.

Nach einer anderen bevorzugten Ausgestaltung der Erfindung ist die Impedanz Z1 hochohmig, z.B. auf 1kΩ oder 1MΩ, eingestellt. Somit ist die Signalanpassungs-Elektronik 1 als einen, insb. die Information tragenden, Spannungsanteil vom Eingangs-Signal s1 erfassend und auf das Ausgangs-Signal s2 abbildend, konfiguriert.

Ferner weist die Impedanz Z1 nach einer weiteren bevorzugten Ausgestaltung der Erfindung einen größten Widerstandswert von praktisch unendlich auf, wodurch eingangs der Signalanpassungs-Elektronik 1 praktisch ein offener Schalter realisiert ist.

Nach einer anderen bevorzugten Ausgestaltung der Erfindung ist die Signalanpassungs-Elektronik 1 so konfiguriert, daß das mittels der Signalanpassungs-Elektronik 1 erzeugte Ausgangs-Signal s2 gleichzeitig einen Stromanteil und einen Spannungsanteil des Eingangs-Signals s1, insb. ein Verhältnis des Spannungsanteils zum Stromanteil, repräsentiert. Dazu umfaßt die Signalanpassungs-Elektronik 1 eine den Stromanteil erfassende zweite Verstärkerschaltung. Ferner ist die Verstärkerschaltung V1 für diesen Fall als Spannungsanteil erfassend eingestellt.

Zum Erzeugen des Erkennungs-Signals c1 umfaßt die Signalerkennungs-Elektronik 2 nach einer bevorzugten Ausgestaltung der Erfindung gemäß Fig. 4 eine Merkmals-Stufe 21, die dazu dient, das Ausgangs-Signal s2 in ein dieses repräsentierendes Ensemble von Merkmalen zu transformieren. Dazu erzeugt die Merkmals-Stufe 21 ein, z.B. bitweise, quantisiertes, d.h. in einzelne, die Merkmale repräsentierende, Signalstellen unterteiltes, Merkmals-Signal c11.

Das Merkmals-Signal c11 weist bevorzugt mindestens einen ersten Signalpegelzustand auf, falls das Eingangs-Signal s1 der ersten Signalklasse angehört und weist mindestens einen zweiten Signalpegelzustand auf, falls das Eingangs-Signal s1 der zweiten Signalklasse angehört. Ferner nimmt das Merkmals-Signal c11 bevorzugt mindestens einen dritten Signalpegelzustand an, wenn das Eingangs-Signal s1 weder der ersten noch der zweiten Signalklasse zuordenbar ist.

Zur Darstellung von Merkmalen können z.B. in programmierbaren Funktionsspeichern, insb. einem EPROM oder einem EEPROM, der Merkmals-Stufe 21 implementierte Vergleichsschaltungen und/oder Fuzzy-Sets dienen, die das Ausgangs-Signal s2 mit vorgegebenen Referenzwerten und/oder Referenzfunktionen vergleichen und binär-logische Vergleichswerte und/oder fuzzy-logische Zugehörigkeitswerte an entsprechenden Signalstellen des Merkmals-Signals c11 liefern.

Gemäß der Fig. 4 umfaßt die Signalerkennungs-Elektronik 2 des weiteren eine der Merkmals-Stufe 21 nachgeschaltete Klassifikations-Stufe 22, die dazu dient, das Merkmals-Signals c11 zu interpretieren, d.h. vorbestimmte Signalstellen des quantisierten Merkmals-Signals c11 auf das Erkennungs-Signal c1 abzubilden und somit das Eingangs-Signal s1 zu identifizieren.

Zur Interpretation des Merkmals-Signals c11 dient nach einer weiteren bevorzugten Ausgestaltung der Erfindung ein Ensemble von binär-logischen und/oder fuzzy-logischen Entscheidungs-Regein, die die durch die einzelnen Signalstellen des Merkmals-Signals c11 repräsentierten Merkmale, insb. schalt-algebraisch, miteinander verknüpfen. Derartige binär-logischer Entscheidungs-Regeln können z.B. mittels kombinatorischen Schaltnetzen und/oder sequentiellen Schaltwerken dargestellt werden, die in der Signalerkennungs-Elektronik 2 mittels festverdrahter Schaltungsanordnungen und/oder mittels in einem programmierbaren Funktionsspeicher, z.B. einem EPROM oder EEPROM, implementierte Rechenroutinen realisiert sind, und die das Erkennungs-Signal c1 als eine, z.B. dual codierte, Sequenz gewichteter binärer Signalpegel liefern. Zur Darstellung fuzzy-logischer Entscheidungs-Regeln werden üblicherweise ebenfalls in einem programmierbaren Funktionsspeicher implementierte Rechenroutinen verwendet. Des weiteren können zur Interpretation des Merkmals-Signals c11 auch sogenannte Abstands-Klassifikatoren dienen, die dessen Unterschied zu klassierten und gespeicherten Merkmals-Signal-Prototypen bestimmen und entsprechend bewerten.

Nach einer anderen bevorzugten Ausgestaltung der Erfindung ist der Klassifikations-Stufe 22 eingangsseitig ein der Interpretation des Merkmals-Signals c11 dienendes, eine momentane Einstellung und/oder eine momentane Parametrierung der Signalanpassungs-Elektronik 1 repräsentierendes ebenfalls quantisiertes, insb. digitales, Einstellungs-Signal c5 zugeführt. Dieses Einstellungs-Signal c5 wird bevorzugt mittels der Einstellungs-Elektronik 3 erzeugt; es kann aber auch direkt von der Signalanpassungs-Elektronik 1 geliefert werden.

Nach einer weiteren bevorzugten Ausgestaltung der Erfindung ist das Eingangs-Signal s1 ein Stromsignal und der ersten Signalklasse zugeordnet. Zum Identifizieren des Eingangs-Signals s1 wird mittels der Signalerkennungs-Elektronik 2 ein die erste Signalklasse und damit den als Informationsträger dienenden Stromanteil repräsentierenden erster Signalpegelzustand des Erkennungs-Signals c1 erzeugt. Dazu dient ein erstes in der Merkmals-Stufe 21 implementiertes Merkmal, das einen zwischen dem Ausgangs-Signals s2 und einem Strom-Referenzwert momentan bestehenden Unterschied repräsentiert, wobei dieser Strom-Referenzwert einer Stromstärke des Eingangs-Signals s1 von z. B. 1 mA entspricht. Zur Darstellung des ersten Merkmals dient bevorzugt eine erste Vergleichsfunktion, die eine erste Signalstelle des Merkmals-Signal c11 auf einen Signalpegel von gleich logisch eins setzt, wenn ein momentaner Wert des Ausgangs-Signals größer als der Strom-Referenzwert ist. Ferner dient zum Identifizieren Eingangs-Signal s1 eine in der Klassifikations-Stufe 22 implementierte erste Entscheidungs-Regel die das Erkennungs-Signal c1 auf einen vorbestimmten ersten Signalpegelzustand setzt, wenn die erste Signalstelle des Merkmals-Signals c11 auf logisch eins gesetzt ist sowie eine, die momentane Einstellung der Signalanpassungs-Elektronik 1 als den Stromanteil des Eingangs-Signals erfassend repräsentierende, erste Signalstelle des Einstellungs-Signals c5 ebenfalls einen Signalpegel von logisch eins aufweist.

Nach einer anderen bevorzugten Ausgestaltung der Erfindung ist das Eingangs-Signal s1 ein Spannungssignal und der zweiten Signalklasse zugeordnet. Zum Identifizieren des Eingangs-Signals s1 wird mittels der Signalerkennungs-Elektronik 2 ein die zweite Signalklasse und damit den als Informationsträger dienenden Spannungsanteil repräsentierender zweiter Signalpegelzustand des Erkennungs-Signals c1 erzeugt. Dazu dient ein zweites in der Merkmals-Stufe 21 implementiertes Merkmal, das einen zwischen dem Ausgangs-Signal s2 und einem Spannungs-Referenzwert momentan bestehenden Unterschied repräsentiert, wobei dieser Spannungs-Referenzwert einer Spannungshöhe des Eingangs-Signals s1 von z. B. 1 V entspricht. Zur Darstellung des zweiten Merkmals dient bevorzugt eine zweite Vergleichsfunktion der Merkmals-Stufe 21, die eine zweite Signalstelle des Merkmals-Signals c11 auf einen Signalpegel von gleich logisch eins setzt, wenn ein momentaner Wert des Ausgangs-Signal größer als der Spannungs-Referenzwert ist. Ferner dient zum Identifizieren des Eingangs-Signal s1 eine in der Klassifikations-Stufe 22 implementierte zweite Entscheidungs-Regel die das Erkennungs-Signal c1 auf einen vorbestimmten zweiten Signalpegelzustand setzt, wenn die zweite Signalstelle des Merkmals-Signals c11 logisch eins ist sowie eine die, momentane Einstellung der Signalanpassungs-Elektronik 1 als den den Spannungsanteil des Eingangs-Signals s1 erfassend repräsentierende, zweite Signalstelle des Einstellungs-Signal c5 ebenfalls einen Signalpegel von logisch eins aufweist.

Selbstverständlich können in Abhängigkeit von der Signal-Umgebung, innerhalb der die Schaltungsanordnung eingesetzt wird oder werden soll, neben den erwähnten Signalklassen oder anstelle derselben, weitere Signalklassen, z.B. für Signale bei denen eine Frequenz eines Spannungsanteils oder eines Stromanteils des Eingangs-Signals als Informationsträger dient, gebildet sowie weitere entsprechende Merkmale und Entscheidungs-Regeln in die Signalerkennungs-Elektronik 2 implementiert werden.

Ferner können in die Merkmals-Stufe 21, z.B. zeitliche Verläufe des Eingangs-Signals s1 auswertende Intergrier- und/oder Differenzierfunktionen implementiert sein, so daß das von der Signalanpassungs-Elektronik 1 erzeugte Ausgangs-Signal s2 z.B. auch einen zeitlich differenzierten oder einen zeitlich integrierten Spannungsanteil des Eingangs-Signals s1 repräsentiert.

Zum Erzeugen des Stell-Signals c2 und/oder des Anzeige-Signals c3 sind nach einer weiteren bevorzugten Ausgestaltung der Erfindung in einem Tabellenspeicher der Einstellungs-Elektronik 3, insb. in einem programmierbaren Festwertspeicher, der ersten und der zweiten Signalklasse entsprechende Einstell- und oder Parameterwerte für die Signalanpassungs-Elektronik 1 adressiert gelistet. Ferner dient das Erkennungs-Signal c1 dabei als eine entsprechende Speicherzugriffs-Adresse, mittels der als Stell-Signal c2 und/oder als Anzeige-Signal c3 dienende Sätze von Parametern und/oder Einstellwerten, z.B. für die Eingangsimpedanz und/oder für die Verstärkung der Signalanpassungs-Elektronik 1, aus dem Tabellenspeicher ausgelesen und in der oben beschriebenen Weise ausgangseits der Einstellungs-Elektronik 3 ausgegeben wird.

Nach einer bevorzugten Weiterbildung der Erfindung umfaßt die Schaltungsanordnung eine als Stromquelle konfigurierte Verstärkerschaltung 5, die gemäß Fig. 5 dazu dient, einen als Stromanteil des Eingangs-Signals s1 dienenden, konstanten oder variablen Meßstrom in einen Meßwiderstand R, z.B. einen temperaturempfindlichen oder dehnungsempfindlichen Widerstand, des oben erwähnten Meßgerätes einzuspeisen. Ein daraus resultierender Spannungsabfall über dem Meßwiderstand R dient dabei als informationstragender Spannungsanteil des Ausgangs-Signals des Meßgerätes, d.h. das entsprechende Eingangs-Signals s1 ist für diesen Fall ein Spannungssignal und gehört damit der zweiten Signalklasse an.

Für den Fall, daß, wie in derartigen Signalverarbeitungs-Einheiten durchaus üblich, zwei oder mehr Meßgeräte angeschlossen sind, kann in vorteilhafter Weise eine einzige Signalerkennungs-Elektronik verwendet werden, der die einzelnen Signalanpassungs-Elektroniken mittels eines Multiplexers sequentiell aufgeschaltet werden.

## Patentansprüche

1. Schaltungsanordnung zum Identifizieren eines zu einer vorbestimmten Signalklasse gehörenden Eingangs-Signals (s1), welche Schaltungsanordnung umfaßt:
- eine Signalanpassungs-Elektronik (1) für das Eingangs-Signal (s1), die ein Ausgangs-Signal (s2) erzeugt,
-- das einen Stromanteil des Eingangs-Signals (s1) und/oder
-- das einen Spannungsanteil des Eingangs-Signals (s1) repräsentiert sowie
- eine Signalerkennungs-Elektronik (2), die mittels des Ausgangs-Signals (s2) ein die Signalklasse repräsentierendes Erkennungs-Signal (c1) liefert.

2. Schaltungsanordnung nach Anspruch 1, die eine Einstellungs-Elektronik (3) umfaßt, die mittels des Erkennungs-Signals (c1) ein dem Einstellen und/oder dem Parametrieren der Signalanpassungs-Elektronik (1) dienendes Stell-Signal (c2) erzeugt.

3. Schaltungsanordnung nach Anspruch 1 oder 2, die eine den Stromanteil des Eingangs-Signals (s1) liefernde Stromquelle (5) umfaßt.

4. Schaltungsanordnung nach einem der Ansprüche 1 bis 3, bei dem als Eingangs-Signal (s1) ein Ausgangs-Signal eines Meßgerätes dient.

5. Schaltungsanordnung nach einem der Ansprüche 1 bis 4, die als eine Komponente einer Meßdaten erfassenden Signalverarbeitungs-Einheit dient.
